# EUROPEAN PATENT APPLICATION

(11) **EP 4 814 349 A1**
(43) Date of publication of application: **30.09.2026**
(21) Application number: 25166389.4
(22) Date of filing: 26.03.2025
(51) Int. Cl.: F16K 7/00, F16K 39/02, F16K 1/36

(54) **HIGH PRESSURE VALVE**

(71) Applicant: ArianeGroup GmbH, 82024 Taufkirchen (DE)
(72) Inventor: VOGEL, Daniel Singhara, 82041 Deisenhofen (DE); GRAF, Simon, 28213 Bremen (DE); OPL, Bernhard, 81379 München (DE); TREBER, Julius, 81735 München (DE)
(74) Representative: Schicker, Silvia

(57) **Abstract**

The present disclosure relates to a high pressure valve (1), comprising an inlet (10) in fluid-communication with a first volume (V_i), an outlet (20) in fluid-communication with a second volume (V_o) and a separator (30) fluid-impermeably separating, in a closed state of the separator (30), the first volume (V_i) and the second volume (V_o), and allowing, in an opened state of the separator (30), fluid-communication between the first volume (V_i) and the second volume (V_o), wherein the separator (30) encloses a third volume (V_b) in fluid-communication with the second volume (V_o), wherein the third volume (V_b) is fluid-permeably separated from the second volume (V_o) by a narrowing in a cross-sectional area of the separator (30).

## Description

### Technical Field

The present disclosure generally relates to a high pressure valve. In particular, the present disclosure relates to a high pressure valve for use in a pressure control assembly (PCA).

### Background

There are various designs in gas valve technology. For high-pressure valves in particular, the aim is to achieve a pressure-balanced valve architecture in which the pressure of the fluid has little or no influence on the required opening and closing forces.

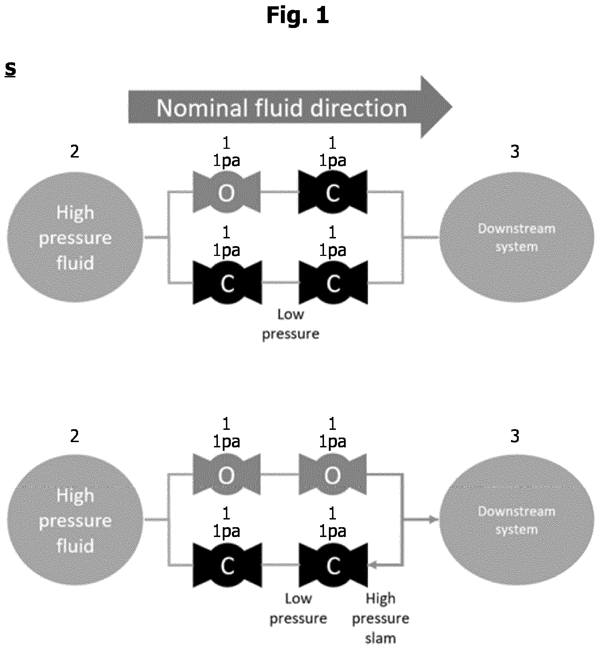

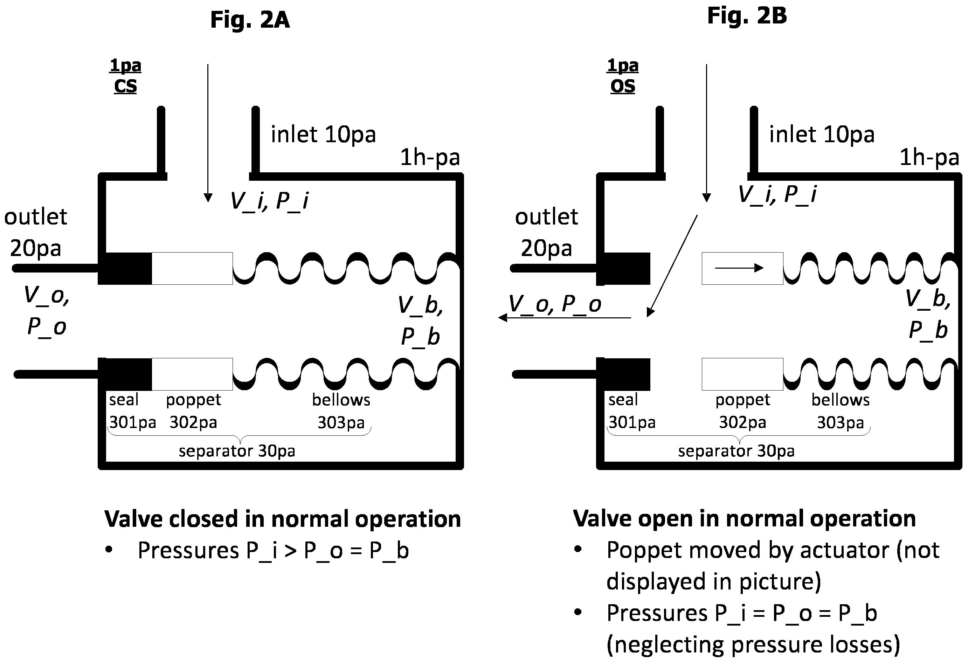

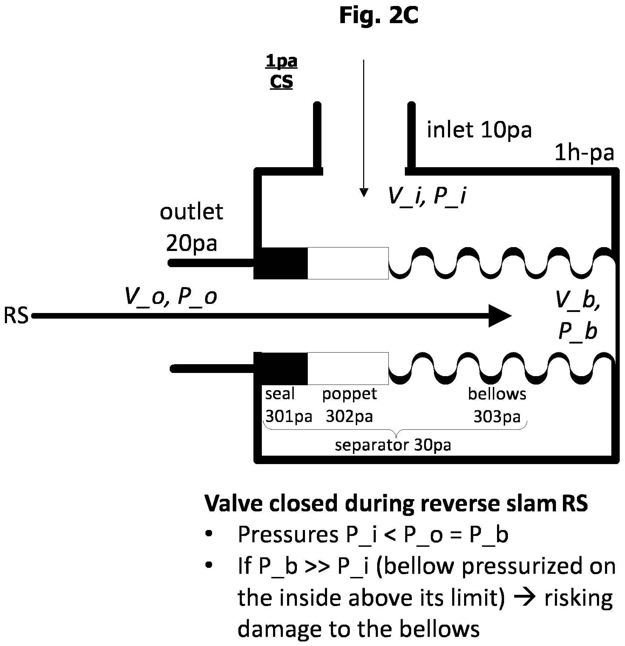

Fig. 1 shows a valve system S, such as a PCA, comprising a redundant arrangement of high pressure valves 1pa, a source of high pressure fluid 2 and a downstream system 3 according to the prior art. In turn, Figs. 2A and 2B respectively show a closed state CS and an opened state OS of such a high pressure valve 1pa according to the prior art. The high pressure valve 1pa comprises an inlet 10pa in fluid-communication with an inner volume V_i, an outlet 20pa in fluid-communication with an outer volume V_o and a separator 30pa fluid-impermeably separating, in the closed state CS of the separator 30pa (see Fig. 2A), the inner volume V_i and the outer volume V_o. Moreover, the separator/bellows 30pa encloses a bellows volume V_b in fluid-communication with the outer volume P_o. The valves 1pa of the redundant line are closed (depicted as "C"), see upper part of Fig. 1. When the valves 1pa of the parallel line are opened, a so-called "reverse slam" occurs (further described in relation to Fig. 2C below), i.e. an increase in pressure P_o at the outlet 20pa of the valve 1pa on the redundant line, see lower part of Fig. 1.

As is shown in Fig. 2A, under normal operation, the pressure P_i of the inner volume V_i is greater than the pressure P_o of the outer volume V_o, while the pressure P_o of the outer volume V_o is (substantially) equal to the pressure P_b of the bellows volume V_b. As is shown in Fig. 2B, the separator/bellows 30pa allows, in the opened state OS of the separator, fluid-communication between the inner volume P_i and the outer volume P_o. In this case, a poppet 302pa (of the separator 30pa) is moved by an actuator (not shown) into the opened state OS (away from a seal 301pa of the separator 30). In this case, the pressure P_i of the inner volume V_i, the pressure P_o of the outer volume V_o and the pressure P_b of the bellows volume V_b are (substantially) equal to one another (neglecting pressure losses).

As hinted at above, special components (separators 30pa) are used for such a pressure-balanced valve architecture (compensation bellows 303pa). Compensation bellows 303pa can be pressurized from the inside (P_i) and outside (P_o), but the maximum design pressure (MDP) for internal pressurization is typically lower than the MDP for external pressurization. For instance, in the aerospace industry in particular, several valves 1pa are connected sequentially and in parallel on assemblies (such as PCAs) for redundancy reasons. Depending on the wiring and operating mode, transient pressure conditions (such as the "reverse slam") can occur at this assembly stage which are outside the specification of the bellows and can therefore be potentially damaging.

Fig. 2C shows the prior art high pressure valve 1pa in case of occurrence of the (transient) "reverse slam" RS. As is shown in Fig. 2C, when the valve 1pa is closed during the RS, the pressure P_i of the inner volume V_i is smaller than the pressure P_o of the outer volume V_o, while the pressure P_o of the outer volume V_o is (substantially) equal to the pressure P_b of the bellows volume V_b. If the pressure P_b of the bellows volume V_b is significantly greater then the pressure P_i of the inner volume P_i (i.e., the bellows 303pa is pressurized on its inside above its limit), a risk of damaging the bellows 303pa arises.

In other words, for these transient pressure conditions, the "reverse slam" RS may occur, i.e., a sudden increase in pressure P_o at the outlet 20pa of a valve 1pa, typically caused by a valve 1pa opening on a redundant line of valves 1pa (see lower part of Fig. 1). In particular, if lower pressure conditions prevail at the inlet 10pa of the affected valve 1pa, the bellows 303pa is subjected to additional stress. To avoid such cases, special measures must be taken that can significantly increase the implementation effort and lead to inefficiencies.

### Summary

Accordingly, there is a need for an implementation of an improved high pressure valve that avoids one or more of the above-stated problems of the prior art.

These objects are solved by the present invention as defined by the independent claims. Preferred embodiments are defined by the dependent claims.

In addition, the present disclosure enables the following advantages:
- Enabling a specially designed component connected to the bellows unit that protects the bellows' inside from damaging pressure gradients in transient operating modes without affecting the basic operation (pressure balanced valve).
- Enabling a valve that is robust against various transient operating modes and incorrect handling, which significantly reduces the implementation and development costs of a PCA.
- Equalising a pressure between the upstream and downstream volumes of the valve to prevent over-pressurisation of the inner volume of the valve's bellows.

In a first aspect to better understand the present disclosure, there is provided a high pressure valve, comprising an inlet in fluid-communication with a first volume, an outlet in fluid-communication with a second volume and a separator fluid-impermeably separating, in a closed state of the separator, the first volume and the second volume, and allowing, in an opened state of the separator, fluid-communication between the first volume and the second volume, wherein the separator encloses a third volume in fluid-communication with the second volume, wherein the third volume is fluid-permeably separated from the second volume by a narrowing in a cross-sectional area of the separator.

In a first refinement of the first aspect, in case of a transient increase in pressure at the outlet, the narrowing in the cross-sectional area of the separator preferably causes a transient increase in a steady-state pressure of the second volume that in turn preferably causes an opening force on the separator that in turn preferably causes a transient partial or full movement of the separator into the opened state. In that case, the high pressure valve preferably further comprises a detector configured to detect the transient increase in the pressure at the outlet.

In a second refinement of the first aspect, the separator preferably comprises a seal fluid-impermeably connected to the outlet, a bellows having a first end and a second end, wherein the second end is fluid-impermeably connected to a housing of the high pressure valve, and a poppet fluid-impermeably connected to the first end of the bellows, wherein, in the closed state of the separator, the poppet fluid-impermeably abuts to the seal, and in the opened state of the separator, the poppet is configured to retract from the seal. In that case, the high pressure valve preferably further comprises an actuator configured to advance the poppet to fluid-impermeably abut to the seal for attaining the closed state and to retract the poppet from the seal for attaining the opened state.

In a first improvement of the second refinement, the poppet preferably has an orifice that constitutes the narrowing in the cross-sectional area. When combining the first improvement of the second refinement with the first refinement, the orifice preferably defines at least one of the following properties of the poppet: flow-through area, geometry and mutual spatial arrangement of several orifices. In that case, the flow-through area preferably is in a range of 1% to x99%, of the hydraulic diameter of the bellows, the geometry preferably is any manufacturable shape and any number of orifices, and/or mutual the spatial arrangement of several orifices preferably is on a circle, on a polygon or in a row.

In a second improvement of the second refinement, the poppet preferably is a bellows flange having an integral aperture that constitutes the narrowing in the cross-sectional area. Alternatively, the poppet preferably has an integral aperture that constitutes the narrowing in the cross-sectional area. When combining the second improvement of the second refinement with the first refinement, the aperture preferably defines at least one of the following properties of the poppet: flow-through area, geometry and mutual spatial arrangement of several apertures. In that case, the flow-through area preferably is in a range of 1% to x99%, of the hydraulic diameter of the bellows, the geometry preferably is any manufacturable shape and any number of apertures, and/or the mutual spatial arrangement of several apertures preferably is on a circle, on a polygon or in a row.

In a third refinement of the first aspect (applying to the first and second improvements of the second refinement), the one or more properties are preferably selectable to adjust the opening force to the transient pressure at the outlet.

In a fourth refinement of the first aspect (applying to all other refinements and improvements), the fluid is preferably gas, and the high pressure valve preferably is a high pressure gas valve, HPGV. Alternatively, the fluid is preferably liquid, and the high pressure valve preferably is part of a pressure control assembly, PCA, particularly preferably used for storing a cryogenic liquid in an in-space application.

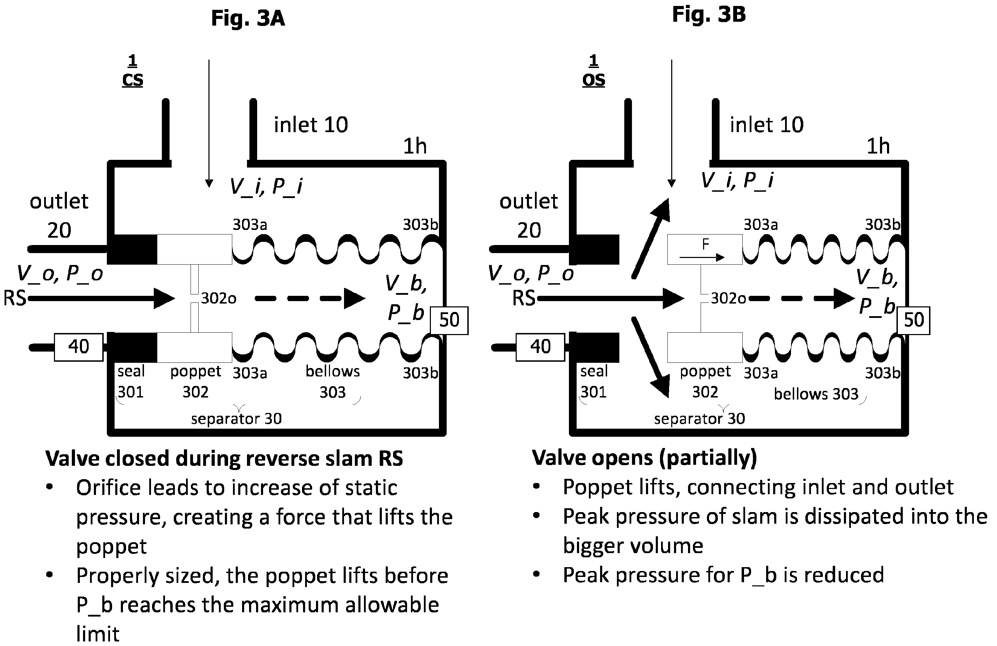

Without loss of generality, the present disclosure can be summarized as follows:
- There are various designs in gas valve technology. For high-pressure valves in particular, the aim is to achieve a pressure-balanced valve architecture in which the pressure of the fluid has little or no influence on the required opening and closing forces.
- Special components are used for this pressure-balanced valve architecture (compensation bellows).
- Compensation bellows can be pressurized from the inside and outside, but the Maximum Design Pressure (MDP) for internal pressurization is typically lower than the MDP for external pressurization.
- In the aerospace industry in particular, several valves are connected sequentially and in parallel on assemblies (Pressure Control Assembly, PCA) for redundancy reasons.
- Depending on the wiring and operating mode, transient pressure conditions can occur at this assembly stage which are outside the specification of the bellows and can therefore be potentially damaging.
- For these transient pressure conditions, the "reverse slam", a sudden increase in pressure at the outlet of a valve, typically caused by a valve opening on a redundant line (see Fig. 1), should be mentioned here in particular. In particular, if lower pressure conditions prevail at the inlet of the affected valve, the bellows is subjected to additional stress. To avoid such cases, special measures must be taken that can significantly increase the implementation effort and lead to inefficiencies.
- The inner volume of the bellows is separated from the downstream volume of the valve by a constriction of the flow cross-section (protective orifice). In the event of "reverse slams" (sudden pressure increase at the outlet), this orifice ensures a short-term increase in the steady-state pressure, which in turn results in a force in the opening direction (to the right in Fig. 3B). By designing this orifice (flow-through area, geometry, spatial arrangement), the amount of the resulting opening force can be adapted to the expected pressure conditions. In this way, a short-term, complete/partial opening of the valve can be provoked. This can equalise the pressure between the upstream and downstream volumes of the valve and prevent over-pressurisation of the inner volume of the bellows.

### Brief Description of the Drawings

The embodiments of the technique presented herein are described herein below with reference to the accompanying drawings, in which:
- Fig. 1: shows a valve system S, such as a PCA, comprising a redundant arrangement of high pressure valves according to the prior art;
- Figs. 2A and 2B: respectively show a closed state CS and an opened state OS of a high pressure valve according to the prior art;
- Fig. 2C: shows the prior art high pressure valve 1pa in case of occurrence of the (transient) "reverse slam" RS;
- Figs. 3A and 3B: respectively show a closed state CS and an opened state OS of a high pressure valve according to the present disclosure; and
- Figs. 4A to 4C: show time curves of pressure increase with "reverse slam" (Fig. 4A), the bellow's internal pressure P_b (Fig. 4B) and a valve/poppet position (Fig. 4C).

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps explained herein may be implemented using software functioning in conjunction with a programmed microprocessor or using an Application Specific Integrated Circuit (ASIC), a Digital Signal Processor (DSP) or general-purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the aspects of (i) an automated process for manufacturing/forming the high pressure valve of the present disclosure and of (ii) simulation processes for the high pressure valve of the present disclosure.

Figs. 3A and 3B respectively show a closed state CS and an opened state OS of a high pressure valve 1 according to the present disclosure. The high pressure valve 1 comprises an inlet 10 in fluid-communication with a first (e.g. inner) volume V_i, an outlet 20 in fluid-communication with a second (e.g. outer) volume V_o and a separator 30 fluid-impermeably separating, in the closed state CS of the separator 30 (see Fig. 3A), the first volume V_i and the second volume V_o. Moreover, the separator (e.g. bellows) 30 (303) encloses a third (e.g. bellows) volume V_b in fluid-communication with the second (e.g. outer) volume P_o. As is shown in Fig. 3B, the separator/bellows 30pa allows, in the opened state OS of the separator, fluid-communication between the first volume P_i and the second volume P_o.

Moreover, the third volume V_b is fluid-permeably separated from the second volume P_o by a narrowing in a cross-sectional area of the separator 30. In other words, the first/inner volume P_b of the bellows 303 is separated from the second/downstream volume P_o of the valve 1 by a constriction of the flow cross-section (such as a protective orifice 302o).

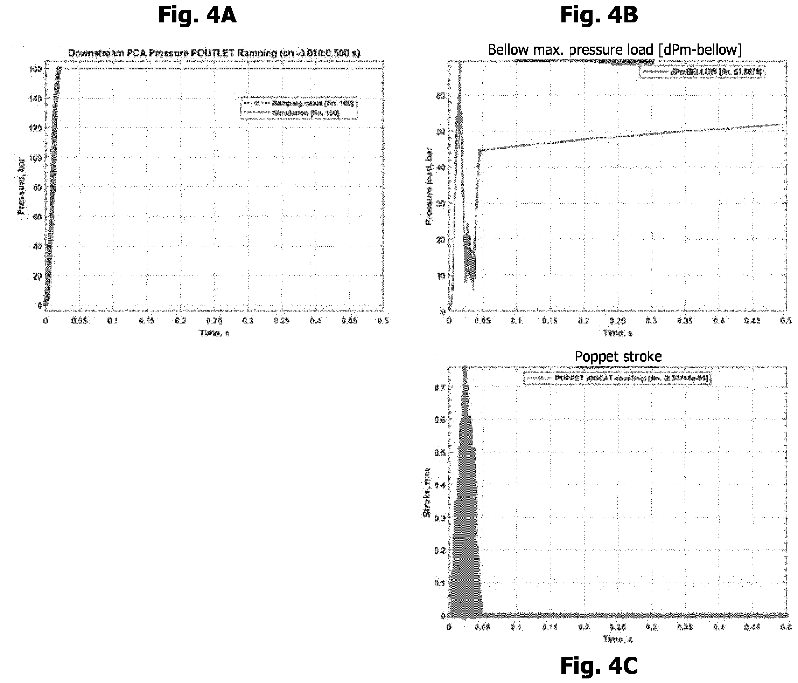

Said narrowing in the cross-sectional area of the separator 30 preferably causes, in case of a transient increase (such as the reverse slam RS) in pressure P_o at the outlet 20, a transient increase in a steady-state pressure of the second volume V_o that in turn causes an opening force F on the separator 30 that in turn causes a transient partial or full movement of the separator 30 into the opened state OS. Preferably, the high pressure valve 1 further comprises a detector 40 configured to detect the transient increase in the pressure P_o at the outlet 20 - notably, the detector 40 may be modified or omitted, as a further described in relation to Figs. 4A to 4C hereinbelow.

Moreover, the separator 302 preferably comprises a seal 301 fluid-impermeably connected to the outlet 20, a bellows 303 having a first end 303a and a second end 303b, wherein the second end 303b is fluid-impermeably connected to a housing 1h of the high pressure valve 1, and a poppet 302 fluid-impermeably connected to the first end 303a of the bellows 303, wherein, in the closed state CS of the separator 30, the poppet 302 fluid-impermeably abuts to the seal 301, and in the opened state OS of the separator 30, the poppet 302 is configured to retract from the seal 301. Preferably, the high pressure valve 1 further comprises an actuator 50 configured to advance the poppet 302 to fluid-impermeably abut to the seal 301 for attaining the closed state CS and to retract the poppet 302 from the seal for attaining the opened state OS - notably, the actuator 50 may be modified or omitted, as a further described in relation to Figs. 4A to 4C hereinbelow.

Still further, the narrowing in the cross-sectional area of the separator may by attained by the following alternatives:
- The poppet 302 preferably has an orifice 302o that constitutes the narrowing in the cross-sectional area.
- The poppet 302 preferably is a bellows flange having an integral aperture that constitutes the narrowing in the cross-sectional area.
- The poppet 302 preferably has an integral aperture that constitutes the narrowing in the cross-sectional area.

Any of the above alternatives allows for at least a limited fluid-communication between the second volume V_o and the third volume V_b. The orifice 302o or the aperture may have the following properties:
flow-through area,
geometry and
mutual spatial arrangement of several orifices/apertures.

By designing the orifice's or aperture's properties (flow-through area, geometry, mutual spatial arrangement), the amount of the resulting opening force F can be adapted to the expected pressure conditions. In other words, the one or more properties are selectable to adjust the opening force to the transient pressure at the outlet. In this way, a short-term, complete/partial opening of the valve 1 can be provoked.

In both the orifice 302o alternative and the aperture alternative, suitable implementations or values may be in a range of 1% to 99% of the hydraulic diameter of the bellow 303 for the flow-through area, any manufacturable shape (such as circular, rectangular, polygonal etc.) and any number of orifices/apertures for the geometry is, and/or on a circle, on a polygon or in a row for the spatial arrangement. In other words, the sizing/dimensioning of these properties/parameters is part of the engineering process and may depend on a multitude of factors, such as fluid, pressures, stiffness of bellows/springs, volumes etc. Moreover, the shape of the flow constriction (orifice/aperture) may be typically circular, but can be any (manufacturable) arbitrary shape - for instance, multiple smaller parallel orifices could be used instead of one big orifice.

Finally, the fluid (in the first, second and third volumes P_i, P_o and P_b) preferably is gas, in which case the high pressure valve 1 preferably is a high pressure gas valve, HPGV. Alternatively, the fluid (in the first, second and third volumes P_i, P_o and P_b) preferably is liquid, in which case the high pressure valve 1 preferably is part of a PCA, particularly preferably used for storing a cryogenic liquid e.g. in an in-space application.

Figs. 4A to 4C show time curves of pressure increase with "reverse slam" (Fig. 4A), the bellow's internal pressure P_b (Fig. 4B) and a valve/poppet position (Fig. 4C).

A simulation was carried out for the above-mentioned EPGV (a so-called SMART analysis). As a is seen in Fig. 4A, a 160 bar (reverse) slam on the outlet 20 of the valve 1 would result in an opening (poppet 301 stroke > 0 mm, peaking at appx. 0.73 mm), as is seen in Fig. 4C, and a pressure equalisation between downstream and upstream volume, which limits the maximum internal pressure P_b of the bellows 302 to appx. 70 bar, as is seen in Fig. 4B.

As shown above, said narrowing in the cross-sectional area of the separator 30 preferably causes, in case of a transient increase (such as the reverse slam RS) in pressure P_o at the outlet 20, a transient increase in a steady-state pressure of the second volume V_o that in turn causes an opening force F on the separator 30 that in turn causes a transient partial or full movement of the separator 30 into the opened state OS.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A high pressure valve (1), comprising
an inlet (10) in fluid-communication with a first volume (V_i);
an outlet (20) in fluid-communication with a second volume (V_o); and
a separator (30) fluid-impermeably separating, in a closed state (CS) of the separator, the first volume and the second volume, and allowing, in an opened state (OS) of the separator, fluid-communication between the first volume and the second volume, wherein the separator encloses a third volume (V_b) in fluid-communication with the second volume,
wherein the third volume is fluid-permeably separated from the second volume by a narrowing in a cross-sectional area of the separator.

2. The high pressure valve of claim 1, wherein:
in case of a transient increase (RS) in pressure at the outlet, the narrowing in the cross-sectional area of the separator causes a transient increase in a steady-state pressure of the second volume that in turn causes an opening force (F) on the separator that in turn causes a transient partial or full movement of the separator into the opened state.

3. The high pressure valve of claim 2, further comprising:
a detector (40) configured to detect the transient increase in the pressure at the outlet.

4. The high pressure valve of claim 1, wherein the separator comprises:
a seal (301) fluid-impermeably connected to the outlet;
a bellows (303) having a first end (303a) and a second end (303b), wherein the second end is fluid-impermeably connected to a housing (1h) of the high pressure valve; and
a poppet (302) fluid-impermeably connected to the first end of the bellows, wherein, in the closed state of the separator, the poppet fluid-impermeably abuts to the seal, and in the opened state of the separator, the poppet is configured to retract from the seal.

5. The high pressure valve of claim 4, further comprising:
an actuator (50) configured to advance the poppet to fluid-impermeably abut to the seal for attaining the closed state and to retract the poppet from the seal for attaining the opened state.

6. The high pressure valve of claim 4 or 5, wherein:
the poppet has an orifice (302o) that constitutes the narrowing in the cross-sectional area.

7. The high pressure valve of claim 4 or 5, wherein:
the poppet is a bellows flange having an integral aperture that constitutes the narrowing in the cross-sectional area.

8. The high pressure valve of claim 4 or 5, wherein:
the poppet has an integral aperture that constitutes the narrowing in the cross-sectional area.

9. The high pressure valve of claim 6 combined with claim 2 or 3, wherein the orifice defines at least one of the following properties of the poppet:
flow-through area,
geometry and
mutual spatial arrangement of several orifices.

10. The high pressure valve of claim 9, wherein:
the flow-through area is in a range of 1% to x99%, of the hydraulic diameter of the bellows,
the geometry is any manufacturable shape and any number of orifices, and/or mutual the spatial arrangement is on a circle, on a polygon or in a row.

11. The high pressure valve of claim 7 or 8 combined with claim 2 or 3, wherein the aperture defines at least one of the following properties of the poppet:
flow-through area,
geometry and
mutual spatial arrangement of several apertures.

12. The high pressure valve of claim 11, wherein:
the flow-through area is in a range of 1% to x99%, of the hydraulic diameter of the bellows,
the geometry is any manufacturable shape and any number of apertures, and/or
the mutual spatial arrangement of several apertures is on a circle, on a polygon or in a row.

13. The high pressure valve of any of claims 9 to 12, wherein:
the one or more properties are selectable to adjust the opening force to the transient pressure at the outlet.

14. The high pressure valve of any of claims 1 to 13, wherein:
the fluid is gas, and
the high pressure valve is a high pressure gas valve, HPGV.

15. The high pressure valve of any of claims 1 to 13, wherein:
the fluid is liquid, and
the high pressure valve is part of a pressure control assembly, PCA, preferably used for storing a cryogenic liquid in an in-space application.
